# EUROPEAN PATENT APPLICATION

(11) **EP 1 152 378 A2**
(43) Date of publication of application: **07.11.2001**
(21) Application number: 01302228.0
(22) Date of filing: 12.03.2001
(51) Int. Cl.: G07F 7/10

(54) **Encrypting keypad module**

(30) Priority: 28.04.2000 GB 0010265
(71) Applicant: NCR INTERNATIONAL INC., Dayton, Ohio 45479 (US)
(72) Inventor: Whytock, Alexander William, Coupar Angus, Perthshire PH13 9DE (GB)
(74) Representative: Williamson, Brian

(57) **Abstract**

An encrypting keypad module (10) comprising a keypad (12) and an encryption unit (14) is described. The module (10) includes a reader (16) (such as a Smart card reader) for receiving a removable secure device (50) (such as a Smart card). The keypad module (10) is operable to communicate with the Smart card (50) and to receive secure data therefrom. This secure data may relate to a new PIN key, a new encryption algorithm for use with a PIN key, or such like. An encrypting keypad system, and a method of changing secure information stored in an encrypting keypad module, are also described.

## Description

The present invention relates to an encrypting keypad module. In particular, the present invention relates to an encrypting PIN pad (EPP) module for use with a self-service terminal (SST) such as an automated teller machine (ATM).

ATMs require high electronic security because sensitive information, such as a user's personal identification number (PIN), is entered by a user at the ATM. The entered information is conveyed within the ATM and also outside the ATM to an authorisation centre that authorises a requested transaction.

To ensure that the user's PIN is not divulged by the ATM after it has been entered by the user, a tamper-resistant integral unit is provided having a keypad and an encryption unit. The integral unit is referred to as an encrypting PIN pad (EPP) module.

Once a user has entered his/her PIN, the EPP encrypts the entered digits to ensure that the digits are encrypted prior to leaving the EPP. This ensures that a user's PIN is never conveyed (either within or outside the ATM) as plaintext.

The EPP includes an encryption unit having a random number generator, a cryptographic processor, a non-volatile memory for storing a unique master encryption key and an encryption algorithm, and a volatile memory for storing customer-specific encryption keys, such as a key exchange key and a PIN key.

Typically, when an EPP is manufactured the unique master key is generated by the cryptographic processor within the EPP and stored in the non-volatile memory (which may be EEPROM or battery-backed RAM). The encryption algorithm used, for example the data encryption standard (DES), is also loaded into the non-volatile memory during manufacture of the EPP.

The owner of an ATM loads a key exchange key in plaintext into the EPP in a secure environment. This key exchange key is used to encrypt further keys that are to be loaded into the EPP. For example, if the owner of an ATM updates a PIN key periodically, then the ATM owner uses the key exchange key to encrypt the new PIN key to be loaded and transmits this encrypted new PIN key to the EPP. The EPP receives the encrypted new PIN key, decrypts this key using the key exchange key to produce the plaintext new PIN key, encrypts the plaintext new PIN key using the master key, and stores the encrypted new PIN key in the memory.

If the EPP is tampered with, for example by a third party attempting to gain access to it, then the EPP deletes the master key stored in the non-volatile memory, and any other keys stored in the volatile memory.

When a user enters his/her PIN at an ATM, the EPP uses its PIN key and the stored encryption algorithm (such as DES) to encrypt the entered digits. The encrypted digits are then transmitted from the EPP to an ATM controller, which transmits the encrypted PIN (together with the requested transaction) to an authorisation centre. The authorisation centre decrypts the encrypted PIN to verify the claimed identity of the user, and authorises a requested transaction if sufficient funds are present.

For ATMs connected to a financial institution's network, the encryption algorithm and/or the PIN key can be easily transmitted to each ATM over the network. However, where ATMs having a dial-up connection are used, for example ATMs located in convenience stores, it is much more difficult to load new algorithms or keys securely. Typically, a trusted person manually loads the algorithm and/or key into the EPP on a dial-up ATM. This is much less secure, and increases the possibility of the algorithm and/or key being compromised.

Another problem associated with EPPs is that each EPP is operational on manufacture. It is common for an EPP to be retained for use as a spare part, in the event of an EPP in an ATM malfunctioning. These spare EPPs may have a key exchange key, and possibly a PIN key, loaded into their memory so that they are ready for use. If such a spare EPP was stolen, then a fraudulent person may connect the EPP to apparatus that emulates an ATM. This may enable the fraudulent person to discover the key exchange key and any other key stored in the EPP.

It is among the objects of an embodiment of the present invention to obviate or mitigate one or more of the above disadvantages or other disadvantages associated with encrypting keypad modules.

According to a first aspect of the present invention there is provided an encrypting keypad module comprising a keypad and an encryption unit, characterised in that the keypad module includes a reader for receiving a removable secure device, where the keypad module is operable to communicate with the device and to receive secure data therefrom.

The secure device is operable to store secure data in a tamper-resistant area. One suitable secure device is a Smart card.

By virtue of the present invention, a new PIN key and/or a new algorithm may be loaded into the secure device. The secure device may then be transported to an SST having a keypad module to be updated. The secure device may then be entered into the reader and the new PIN key and/or algorithm transmitted to the keypad module. Any other key may also be loaded in this manner.

One advantage of using a Smart card is that a Smart card provides a secure storage area. Smart cards also require the user to know the location at which a file is stored; this increases security as a fraudulent third party cannot determine the location at which a file (which may contain a new PIN key, a new algorithm, or such like) may be stored on the Smart card.

The keypad module may include a disable switch that is set during manufacture so that the keypad module is inoperative until a code is received via the reader to instruct the keypad module to activate. This has the advantage that a keypad module may be retained for use as a spare part. As the keypad module is disabled until it is activated, the spare keypad module does not present a security risk if it is stolen: it will not assist a fraudulent person in obtaining the master key.

The disable switch may be implemented in software, firmware, or hardware.

Preferably, the keypad module is operable to issue a challenge to any device coupled to the reader, so that if a device fails the challenge then no further communication takes place with that device. The device may be inserted into or otherwise coupled to (for example, using non-contact coupling) the reader.

The keypad module may include a delete mechanism for deleting any information in the keypad module in the event of receipt of an incorrect response to an issued challenge.

The keypad module and the device may implement a peer-to-peer authentication protocol to satisfy each that the other is authentic.

Preferably, the device stores a file having a signed certificate so that the keypad module can read this file and assess whether it trusts the signatory. The keypad module may also store in its non-volatile memory a file having a signed certificate, so that the device can read this file and assess whether it trusts the signatory. The file may store a new algorithm, for example, triple DES, or a new key.

In one embodiment, the keypad module only operates when a secure device is present in the reader. Preferably, the secure device deactivates itself when removed from the reader. This has the advantage that the two main elements of the system, the keypad module and the secure device, only operate when mutually coupled. Thus, each of these two elements (the keypad module and the secure device) may be transported independently without requiring high security.

This keypad module is particularly suitable for low-cost dial-up ATMs (sometimes referred to as entry level ATMs). The keypad module may be an encrypting PIN pad module (EPP).

According to a second aspect of the present invention there is provided an encrypting keypad system comprising an encrypting keypad module, characterised in that the encrypting keypad module includes a reader, and the system further comprises a removable secure device coupled to the reader, where the keypad module is operable to communicate with the device and to receive secure data therefrom.

In one embodiment, the keypad module may only operate when a secure device is present in the reader.

According to a third aspect of the present invention there is provided a method of changing secure information stored in an encrypting keypad module, the method comprising the steps of: storing secure information on a secure device in a secure location; transporting the secure device to an encrypting keypad module; coupling the secure device to the encrypting keypad module to allow the secure device to transmit secure information to the keypad; and removing the secure device from the module.

These and other aspects of the present invention will be apparent from the following specific description, given by way of example, with reference to the accompanying drawings, in which:
Fig 1 is a schematic diagram of an encrypting keypad module according to one embodiment of the present invention;
Fig 2 is a block diagram of a secure device for use with the keypad module of Fig 1;
Fig 3 is a flowchart showing the steps involved in upgrading a keypad module with secure information;
Fig 4 is a schematic diagram of a system comprising the device of Fig 2 inserted into the keypad module of Fig 1; and
Fig 5 is a schematic diagram of system according to another embodiment of the present invention.

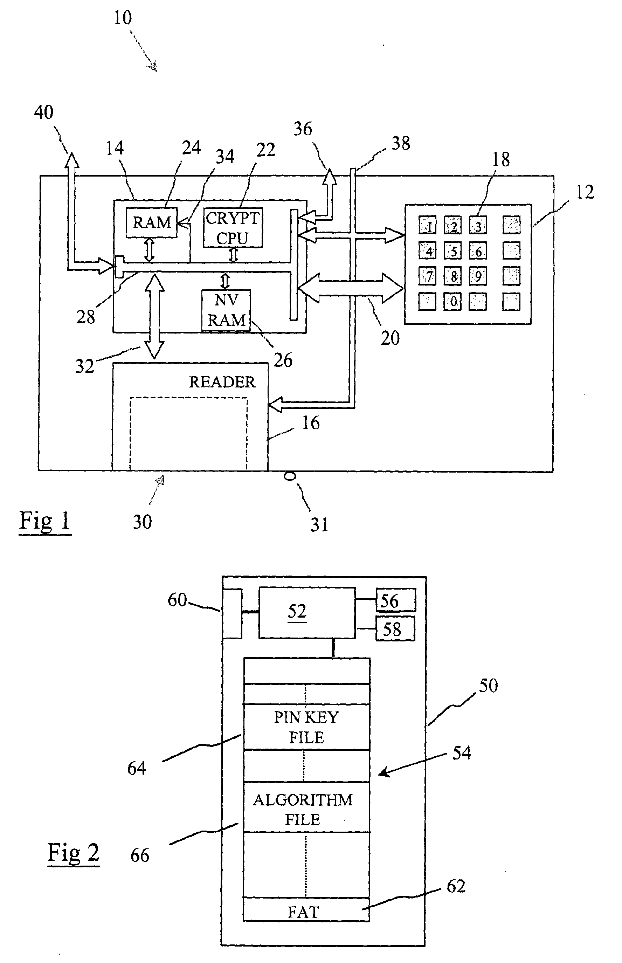

Referring to Fig 1, which is a schematic diagram of a tamper-resistant encrypting keypad module 10 in the form of an EPP module for an ATM. The EPP module 10 includes a keypad 12, an encryption unit 14, and a secure device reader 16 in the form of a Smart card reader.

The keypad 12 comprises sixteen individual keys 18, each key having a surface that is either blank or provided with a legend. Those keys having a legend have either a numeral (such as "1", "2", or such like) or a word (such as "Enter", "Cancel", or such like) etched or printed on the surface of the key 18.

Data from the keypad 12 is transmitted to the encryption unit 14 via a tamper-detecting bus 20. Bus 20 includes the scan out lines that indicate which key is depressed. Bus 20 is enveloped by a membrane shield (not shown) that detects any attempt to access the data lines in the bus 20 covered by the shield.

The encryption unit 14 has a cryptographic processor 22 in the form of a general cryptographic device. Suitable cryptographic devices are available from: Dallas Semiconductor Corporation or Philips Semiconductors. The processor 22 has associated volatile memory 24 in the form of RAM (which may have a battery back-up), and non-volatile memory 26 in the form of EEPROM.

The RAM 24 stores a master key which was loaded during manufacture. The EEPROM 26 stores an encryption algorithm (in this embodiment DES) which was also loaded during manufacture.

The processor 22, RAM 24, and EEPROM 26 communicate via an internal bus 28.

Unit 14 includes a tamper-detecting membrane (not shown) for detecting any attempt to open or otherwise access the unit 14.

The Smart card reader 16 is located within the keypad module 10, and module 10 defines a slot 30 through which a Smart card may be inserted to couple with the Smart card reader 16. A small lamp 31 is located in the vicinity of the slot 30.

The reader 16 communicates with the encryption unit 14 via a tamper-detecting bus 32. Bus 32 also has a membrane shield (not shown) that detects any attempt to access the data lines in the bus covered by the shield.

The unit 14 also includes an erase line 34 coupled to the RAM 24. If any of the tamper-detecting membranes detects a breach, then the processor 22 activates erase line 34 to delete the master key stored therein.

Unit 14 is also coupled to function display keys (FDKs) via bus 36. FDKs typically comprise two columns of keys, each column being located on an opposite side of a display, so that the FDKs align with options presented on the display, and a user can select an option by depressing a corresponding FDK.

The keypad 12, encryption unit 14, and card reader 16 each receives power via bus 38; and the encryption unit 14 outputs encrypted data to an ATM controller (not shown) via bus 40.

When the keypad module 10 is connected to an ATM, power is connected to bus 38; an FDK input, if used, is connected to bus 36; and a communications bus is connected to bus 40.

Prior to using the keypad module 10, an ATM owner loads a key exchange key into the keypad module under secure conditions. This key exchange key is used to encrypt any subsequent keys or algorithms that are to be loaded into the keypad module 10.

Reference is now made to Fig 2, which is a block diagram of a security device 50 in the form of a Smart card.

Smart card 50 has processing means 52 in the form of an 8-bit processor and associated storage means 54 in the form of 8kBytes of non-volatile EEPROM. The Smart card 50 also has ROM 56 and RAM 58, and a connector 60 for physically interfacing with a card reader, such as reader 16 (Fig 1).

Smart card 50 also has a file allocation table 62 which is uses to map a file number to the associated physical memory address.

In this embodiment, the Smart card 50 has two software layers. The first layer is a general purpose operating system (GPOS) which implements the ISO 7816 standard and is stored partly in ROM 56 and partly in memory 54. The operating system also provides message management, file management, security management, and utility tools for the Smart card 50.

The second layer is configurable by the user and may comprise one or more applications stored in the EEPROM 54. These applications include a PIN key update file 64 for updating a PIN key, an algorithm update file 66 for updating an algorithm used in the EPP module 10, and a challenge file 68 for issuing challenges to, and for responding to challenges from, the encryption unit 14.

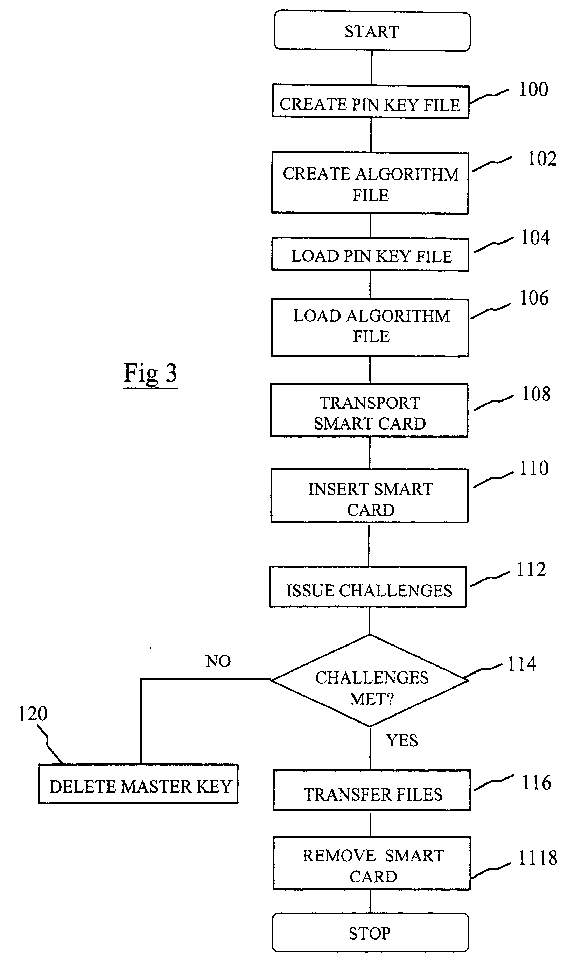

Reference is now made to the flowchart shown in Fig 3 to describe the steps involved in updating an encryption algorithm and a PIN key in the module 10 (Fig 1).

Initially, at a workstation in a secure area, an ATM owner (or a person trusted by an ATM owner) creates a PIN key file 64 (step 100) and an algorithm file 66 (step 102). Each file 64,66 includes a digital certificate signed by the ATM owner.

PIN key file 64 includes a new PIN key encrypted using the key exchange key previously loaded into the encryption unit 14. Algorithm file 66 includes a new algorithm (triple DES), which is also encrypted using the key exchange key previously loaded into the encryption unit 14.

The ATM owner then inserts Smart card 50 into a reader associated with the workstation, and loads the PIN key file 64 (step 104) and the algorithm file 66 (step 106) into the Smart card 50. Card 50 stores these files 64, 66 at predefined locations within the EEPROM 54.

The ATM owner (or a person trusted by the ATM owner) then transports (step 108) the card 50 to the EPP module 10 to be upgraded. This EPP module 10 may be in an ATM located in a convenience store.

Once at the module 10, the owner inserts (step 110) the card 50 into reader 16 to initiate the transfer of the files 64,66.

On detecting a card inserted into the reader 16, the EPP cryptographic processor 22 initiates a certification process (step 112) that involves issuing a challenge to the card 50. The certification process uses a public key infrastructure maintained between the EPP 10 and the card 50. The EPP 10 stores a public key and a private key in the RAM 24, and the card 50 also stores a (different) public key and a (different) private key.

The processor 52 within the card 50 responds to this challenge using challenge file 68, and issues its own challenge (also step 112) to the encryption unit 14. The digital certificates in the files 64,66 are also examined by the cryptographic processor 22. Once the certificates have been validated and the issued challenges have been satisfactorily met (step 114), the card 50 transmits the PIN key file 64 and the algorithm file 66 (step 116) to the encryption unit 14.

The encryption unit 14 receives these encrypted files 64,66, decrypts the files using the key exchange key, and updates the PIN key and the algorithm stored in the RAM 24 in encryption unit 14.

The module 10 then indicates that the files have been transferred by illuminating the small lamp 31.

On seeing the lamp 31 illuminated, the ATM owner removes (step 118) the card 50. The module 10 now uses the upgraded PIN key and algorithm for all subsequent transactions.

If the challenges issued in step 112 are not satisfactorily met by the card 50 or if the certificates are not validated by the cryptographic processor 22, then the cryptographic processor 22 deletes (step 120) the master key and any other secret keys stored in RAM 24 using line 34.

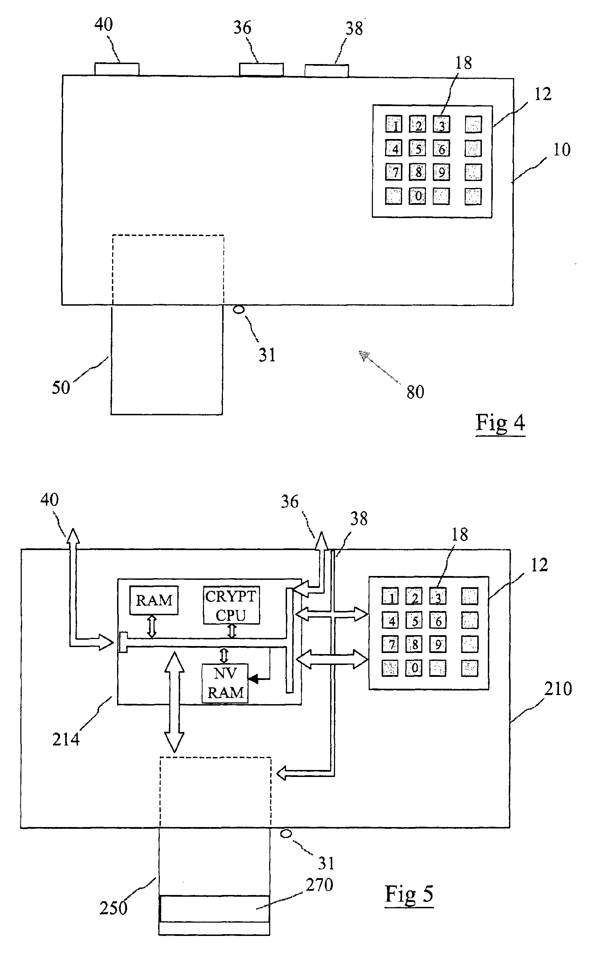

Fig 4 illustrates a system 80 comprising the Smart card 50 inserted into the module 10.

Reference is now made to Fig 5, which shows a system according to another embodiment of the invention. Smart card 250 includes an activation file 270. Activation file 270 is used to activate an EPP module 210, so that the EPP module 210 will not operate unless the activation file is present. In this embodiment, the activation file 270 is not transmitted to the module 270, but is used in a similar way to a dongle, so that the module 210 is only activated when the activation file 270 can be accessed by the EPP module 210.

Various modifications may be made to the above described embodiment within the scope of the invention, for example, in other embodiments, the card 50 may include an initial activation file, so that an encryption unit is only activated when the card is inserted, but remains activated when the card is removed. In other embodiments, the secure device may be a Smart button, ring, or other such device. In other embodiments, the cryptographic processor 22 only deletes the master key if more than a predetermined number of failed challenges have been received.

## Claims

1. An encrypting keypad module (10) comprising a keypad (12) and an encryption unit (14) **characterised in that** the keypad module (10) includes a reader (16) for receiving a removable secure device (50), where the keypad module (10) is operable to communicate with the device (50) and to receive secure data therefrom.

2. An encrypting keypad module according to claim 1, wherein the module includes a disable switch that is set during manufacture so that the keypad module (10) is inoperative until a code is received via the reader (16) to instruct the keypad module (10) to activate.

3. An encrypting keypad module according to claim 1 or 2, wherein the module is operable to issue a challenge to any device (50) coupled to the reader (16), so that if a device fails the challenge then no further communication takes place with that device.

4. An encrypting keypad module according to claim 3, wherein the module includes a delete mechanism operable to erase any key stored in the module in the event of receipt of an incorrect response to an issued challenge.

5. An encrypting keypad module according to any preceding claim, wherein the keypad module only operates when a secure device is present in the reader (16).

6. An encrypting keypad system (80) comprising an encrypting keypad module (10), **characterised in that** the encrypting keypad module (10) includes a reader (16), and the system (80) further comprises a removable secure device (50) coupled to the reader (16), where the keypad module (10) is operable to communicate with the device (50) and to receive secure data therefrom.

7. A system according to claim 6, wherein the keypad module only operates when a secure device (50) is present in the reader (16).

8. A method of changing secure information stored in an encrypting keypad module (10), the method comprising the steps of: storing secure information on a secure device in a secure location; transporting the secure device to an encrypting keypad module; coupling the secure device to the encrypting keypad module to allow the secure device to transmit secure information to the keypad; and removing the secure device from the module.
